# FASCICULE DE BREVET EUROPEEN

(11) **EP 0 524 867 B1**
(45) Date de publication et mention de la délivrance du brevet: **15.11.1995**
(21) Numéro de dépôt: 92402090.2
(22) Date de dépôt: 20.07.1992
(51) Int. Cl.: F16D 55/2255, F16D 65/16, F16D 65/56

(54) **Dispositif de freinage à mâchoires pour véhicules, notamment pour poids lourds**
Fahrzeugbremsvorrichtung mit Backen, insbesondere für Lastkraftwagen
Vehicle brake device with shoes, particularly for heavy duty vehicles

(30) Priorité: 22.07.1991 FR 9109236
(43) Date de publication de la demande: 27.01.1993
(73) Titulaire: JIMECAL, F-85200 Fontenay le Comte (FR); Jeanson, René Henri, F-85200 Fontenay le Comte (FR)
(72) Inventeur: Jeanson, René Henri, F-85200 Fontenay le Comte (FR)
(74) Mandataire: Lemoine, Robert

(56) Documents cités:
- FR-A- 1 169 939
- FR-A- 1 360 523
- FR-A- 1 362 961
- FR-A- 2 396 209
- GB-A- 1 017 282
- US-A- 2 399 010

## Description

La présente invention concerne un dispositif de freinage comprenant un disque solidaire en rotation d'un organe à freiner, notamment d'un arbre de roue de véhicule, deux mâchoires ayant chacune une première et une seconde extrémités, ces mâchoires étant situées de part et d'autre du disque et montées à pivotement sur deux axes fixes solidaires d'un bâti, deux sabots articulés sur les mâchoires autour de deux axes parallèles aux axes fixes, des plaquettes de frein montées sur les sabots de part et d'autre du disque, et des organes de commande aptes à faire pivoter les mâchoires dans un sens afin d'appliquer les plaquettes contre le disque ou en sens inverse afin d'éloigner les plaquettes de ce dernier, les axes de pivotement des mâchoires étant situés entre les première et seconde extrémités de ces dernières tandis que les sabots et les organes de commande sont respectivement adjacents auxdites première et seconde extrémités.

FR-A-1 360 523 décrit un dispositif de freinage de ce type dont les mâchoires sont reliées aux sabots par des chapes prévues sur ces derniers.

US-A-2 399 010 décrit également un dispositif de freinage de ce type mais dont les mâchoires sont reliées aux sabots par des axes traversant des protubérances prévues sur les faces desdits sabots qui sont opposées au disque.

Les solutions proposées dans ces deux documents pour relier les mâchoires aux sabots conduisent à des dispositifs de freinage encombrants et difficiles à installer sur les véhicules, notamment sur les poids lourds sur lesquels les espaces libres sont limités.

La présente invention se propose de remédier à cet inconvénient et, pour ce faire, elle a pour objet un dispositif de freinage du type indiqué ci-dessus, qui se caractérise en ce que les mâchoires comportent à leur première extrémité un bossage cylindrique logé partiellement dans un renfoncement cylindrique de même rayon, aux tolérances de montage près, ménagé dans le sabot correspondant, les bossages et les renfoncements assurant les articulations des sabots sur les mâchoires.

Cet ensemble de dispositions facilite les opérations de montage et contribue à réduire le prix de revient du dispositif de freinage.

Avantageusement, les bossages comportent deux prolongements axiaux faisant saillie latéralement sur les mâchoires et s'avançant jusqu'à des protubérances prévues sur les sabots, la retenue des sabots sur les mâchoires étant assurée uniquement par des goupilles traversant les protubérances et s'étendant le long des prolongements des bossages.

Grâce à cet autre ensemble de dispositions, la réaction de l'effort de freinage exercé par les plaquettes sur le disque est encaissée par les protubérances des sabots de sorte que les mâchoires se trouvent protégées contre tout risque de détérioration accidentelle.

Selon une caractéristique particulière de l'invention, les organes de commande comprennent une tige portant une première et une seconde pièces annulaires sur lesquelles les mâchoires sont articulées, un levier calé sur la tige, entre les pièces annulaires, et un dispositif de commande pneumatique attelé au levier de façon à ce que celui-ci fasse tourner la tige autour de son axe longitudinal lors d'une opération de freinage, au moins l'une des deux pièces annulaires étant apte à se déplacer axialement sur la tige lorsque celle-ci est entraînée en rotation et à assurer ainsi l'actionnement des mâchoires.

Il est souhaitable que les organes de commande comprennent également un mécanisme de rattrapage d'usure comportant une première patte solidaire du levier, une seconde patte solidaire de l'une des pièces annulaires, la seconde patte étant parallèle et adjacente à la première patte, et un axe fixé sur la première patte mais apte à se déplacer axialement dans un orifice de la seconde patte lors d'une commande de freinage et à permettre le déplacement de la ou des pièces annulaires le long de la tige en cas d'usure des plaquettes.

Le mécanisme de rattrapage d'usure permet en effet d'utiliser les plaquettes plus longtemps et par conséquent de réduire les frais d'entretien des dispositifs de freinage ainsi que les temps d'immobilisation des véhicules.

Conformément à un premier mode de réalisation de l'invention, et afin de diminuer fortement le frottement et d'augmenter ainsi le rendement global du dispositif de freinage, la tige comporte un tronçon latéral fileté ayant un filetage en prise avec un filetage ménagé dans la seconde pièce annulaire, un tronçon latéral lisse monté pivotant dans la première pièce annulaire, ainsi qu'un tronçon intermédiaire formant un épaulement avec le tronçon latéral lisse et sur lequel est calé le levier, une butée à rouleaux solidaire de la première pièce annulaire étant montée sur le tronçon latéral lisse et s'appuyant contre l'épaulement.

Les essais de mise au point ont montré que pour augmenter les performances du dispositif de freinage, il était préférable que le diamètre du tronçon latéral lisse soit inférieur à celui du tronçon latéral fileté et que le filetage de celui-ci ait un pas d'au moins 50 mm, de préférence de 60 à 70 mm.

Conformément à un second mode de réalisation de l'invention permettant également d'augmenter fortement le rendement du dispositif de freinage, la tige comprend un tronçon intermédiaire sur lequel est calé le levier, et deux tronçons latéraux ayant des filetages opposés délimitant, avec des filetages complémentaires ménagés dans les pièces annulaires, des pistes renfermant des billes permettant auxdites pièces annulaires de se déplacer en sens inverse le long des tronçons latéraux lors d'une opération de freinage.

Dans ce mode de réalisation, les pièces annulaires portent des bagues pour empêcher les billes de sortir des pistes, des ressorts étant prévus entre l'une des bagues et les billes extrêmes adjacentes à cette dernière pour rappeler l'ensemble des billes dans leur position d'origine après une opération de freinage.

La présence des ressorts entre les billes extrêmes et les bagues est avantageuse car elle évite l'adjonction d'un système coûteux de recirculation de billes tout en permettant aux pièces annulaires de se déplacer par petits à-coups sur toute la longueur des tronçons latéraux de la tige pour compenser l'usure des plaquettes.

Afin de faciliter les opérations de montage et/ou de démontage, la tige est constituée de deux demi-tiges réunies bout à bout au niveau du tronçon intermédiaire par un élément fileté s'étendant coaxialement avec lesdites demi-tiges.

Par ailleurs, pour permettre une articulation sûre des mâchoires sur les première et seconde pièces annulaires, chacune de celles-ci comporte de préférence deux tenons diamétralement opposés faisant saillie sur leur surface latérale, les mâchoires étant articulées sur les pièces annulaires par l'intermédiaire des tenons.

Deux modes d'exécution de la présente invention seront décrits ci-après à titre d'exemples nullement limitatifs en référence aux dessins annexés dans lesquels:
- la figure 1 est une vue de côté schématique d'un dispositif de freinage conforme à l'invention ;
- la figure 2 est une vue de dessus schématique du dispositif de freinage visible sur la figure 1 ;
- la figure 3 est une vue en coupe selon la ligne III-III de la figure 2, la position des pièces annulaires sur la tige étant celle qu'elles occupent lorsque les plaquettes sont neuves ;
- la figure 4 est une vue analogue à la figure 3 mais dans laquelle la position des pièces annulaires sur la tige est celle qu'elles occupent lorsque les plaquettes sont usées ;
- la figure 5 est une vue de dessus partiellement en coupe d'un autre dispositif de freinage conforme à l'invention, les plaquettes de ce dispositif étant neuves, celle de droite étant appliquée contre le disque ;
- la figure 6 est une vue partielle de dessus du dispositif de freinage visible sur la figure 5, la plaquette représentée étant usée et appliquée contre le disque ; et
- la figure 7 est une vue en coupe à échelle agrandie montrant les ressorts emprisonnés entre les billes et la bague située à gauche du levier.

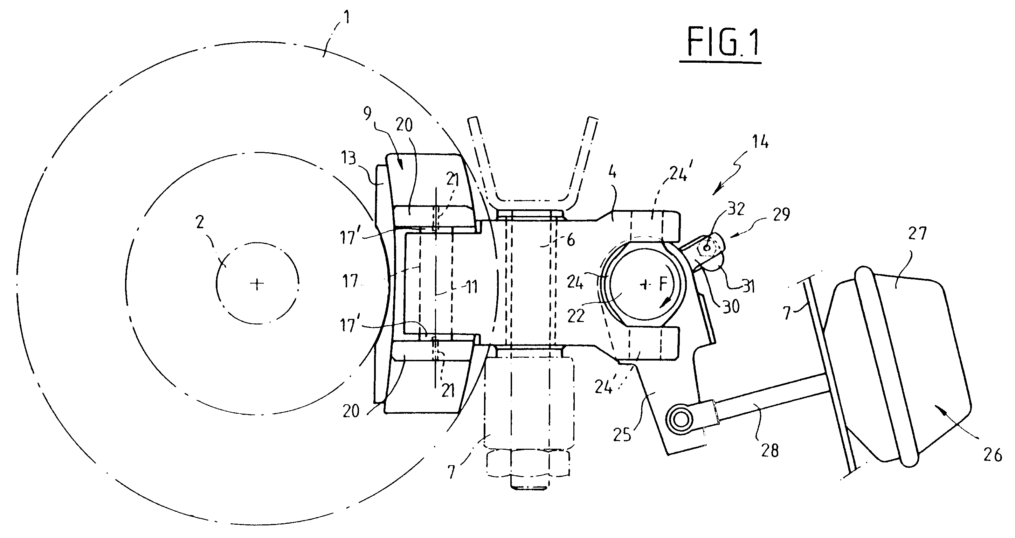

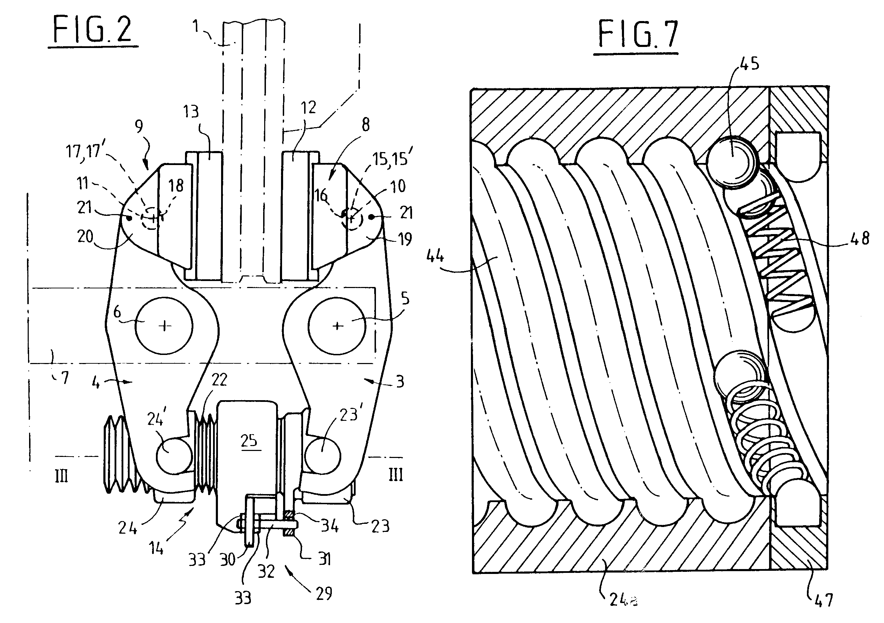

Le dispositif de freinage que l'on peut voir sur les figures 1 à 4 est conçu pour équiper un véhicule routier, et plus particulièrement un poids lourd. Il comprend d'une manière connue en soi un disque 1 solidaire en rotation d'un arbre de roue 2 destinée à être freiné, deux mâchoires 3,4 ayant chacune une première et une seconde extrémités, ces mâchoires étant montées à pivotement sur deux axes fixes 5,6 solidaires d'un bâti 7 porté par le châssis (non représenté) du véhicule, deux sabots 8,9 articulés sur les mâchoires autour de deux axes 10,11 parallèles aux axes fixes, des plaquettes de frein 12,13 montées sur les sabots, de part et d'autre du disque 1, et des organes de commande 14 aptes à faire pivoter les mâchoires dans un sens afin d'appliquer les plaquettes contre le disque (et de freiner l'arbre de roue) ou en sens inverse afin d'éloigner les plaquettes du disque.

Les axes de pivotement 5,6 des mâchoires 3,4 sont situés entre les première et seconde extrémités de ces dernières tandis que les sabots 8,9 et les organes de commande 14 sont respectivement adjacents auxdits première et seconde extrémités.

Conformément à l'invention, la mâchoire 3 comporte à sa première extrémité un bossage cylindrique 15 logé partiellement dans un renfoncement cylindrique 16 ménagé dans le sabot 8 et ayant un rayon égal, aux tolérances de montage près, à celui du bossage 15. De même, la mâchoire 4 comporte à sa première extrémité un bossage cylindrique 17 logé partiellement dans un renfoncement cylindrique 18 ménagé dans le sabot 9 et ayant un rayon égal, aux tolérances de montage près, à celui du bossage 17.

Le bossage 15, dont l'axe longitudinal constitue l'axe de pivotement 10 du sabot 8 sur la mâchoire 3, comporte deux prolongements axiaux 15′ faisant saillie latéralement sur ladite mâchoire 3 et s'avançant jusqu'à des protubérances 19 prévues sur le sabot 8.

De façon analogue, le bossage 17, dont l'axe longitudinal constitue l'axe de pivotement 11 du sabot 9 sur la mâchoire 4, comporte deux prolongements axiaux 17′ faisant saillie latéralement sur ladite mâchoire 4 et s'avançant jusqu'à des protubérances 20 prévues sur le sabot 9.

Des goupilles 21 traversant les protubérances 19,20 et s'étendant le long des prolongements des bossages 15,17 sont en outre prévues pour éviter que les sabots se séparent accidentellement des mâchoires.

En revenant maintenant aux organes de commande 14, on remarquera qu'ils comprennent une tige 22 portant une première et une seconde pièces annulaires 23,24 sur lesquelles les mâchoires 3,4 sont articulées, un levier 25 calé sur la tige 22, entre les pièces annulaires, et un dispositif de commande pneumatique 26 (visible uniquement sur la figure 1) attelé au levier 25 de façon à ce que celui-ci fasse tourner la tige 22 autour de son axe longitudinal lors d'une opération de freinage.

Les pièces annulaires 23,24 comportent chacune deux tenons diamétralement opposés 23′,24′ faisant saillie sur leur surface latérale et sur lesquels les mâchoires 3,4 sont articulées.

Quant au dispositif de commande pneumatique 26, il comprend un cylindre pneumatique 27 fixé sur le bâti 7 et comportant une tige de commande 28 sur laquelle est articulée l'extrémité libre du levier 25, la tige de commande 28 étant destinée à faire pivoter la tige 22 autour de son axe longitudinal en faisant pivoter le levier 25 lorsque le cylindre pneumatique est actionné.

Les organes de commande 14 comprennent également un mécanisme de rattrapage d'usure 29 comportant une première patte 30 solidaire du levier 25, une seconde patte 31 solidaire de la pièce annulaire 23, la patte 31 étant parallèle et adjacente à la patte 30, et un axe 32 fixé par deux écrous 33 sur la patte 30 mais apte à se déplacer longitudinalement dans un orifice 34 ménagé dans la patte 31.

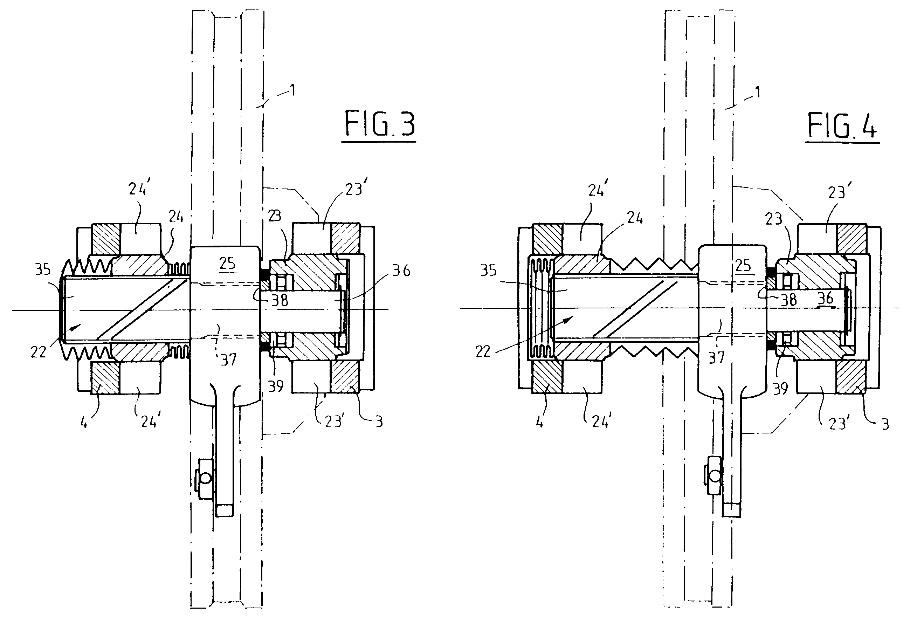

En se référant plus particulièrement aux figures 3 et 4, on remarquera que la tige 22 comprend un tronçon latéral fileté 35 ayant un filetage en prise avec un filetage ménagé dans la seconde pièce annulaire 24, un tronçon latéral lisse 36 monté pivotant dans la première pièce annulaire 23, et un tronçon intermédiaire 37 formant un épaulement 38 avec le tronçon latéral lisse 36 et sur lequel est calé le levier 25.

Une butée à rouleaux 39 solidaire de la première pièce annulaire 23 est montée sur le tronçon latéral lisse 36 et s'appuie contre l'épaulement 38.

Dans le mode de réalisation représenté, le tronçon latéral lisse 36 a un diamètre inférieur à celui du tronçon latéral fileté 35 tandis que le filetage de celui-ci présente un pas très grand d'au moins 50 mm, de préférence de 60 à 70 mm.

Lorsqu'on désire freiner l'arbre de roue 2, on actionne une pédale (non représentée) mettant le cylindre pneumatique 27 sous pression. La tige 28 de celui-ci fait alors pivoter le levier 25 dans le sens de la flèche F sur la figure 1. Le levier 25 étant solidaire en rotation de la tige 22, celle-ci tourne également dans le sens de la flèche F tandis que la seconde pièce annulaire 24 se déplace longitudinalement sur elle dans le sens pour lequel elle s'éloigne de la première pièce annulaire 23.

Par suite du déplacement de la seconde pièce 24 sur la tige 22, les mâchoires 3,4 pivotent autour des axes 5,6 pour appliquer lesplaquettes 12,13 des sabots contre le disque 1.

On notera ici que grâce au très grand pas du filetage du tronçon latéral fileté 35, le dispositif de freinage possède un excellent rendement.

Pour mettre fin à une commande de freinage, il suffit de cesser d'actionner la pédale afin qu'un organe élastique (non représenté) puisse ramener le levier 25 dans sa position d'origine.

Etant donné qu'un usage prolongé du dispositif de freinage provoque une usure des plaquettes 12,13, le mécanisme de rattrapage d'usure 29 permet de compenser cette usure en faisant en sorte que la position d'origine de la seconde pièce 24 puisse varier de la position représentée sur la figure 3 qui correspond au cas où les plaquettes sont neuves à la position représentée sur la figure 4 qui correspond au cas où les plaquettes sont complètement usées.

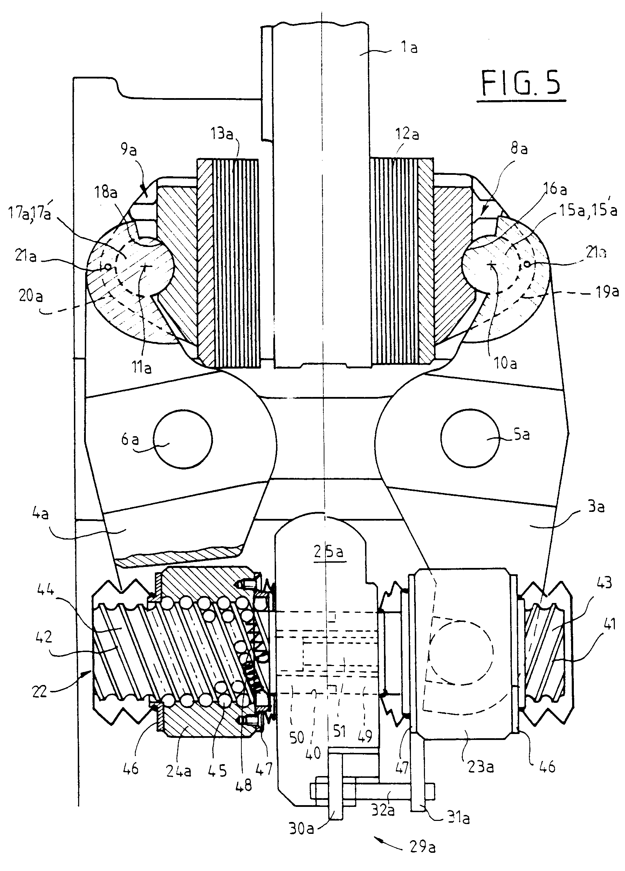

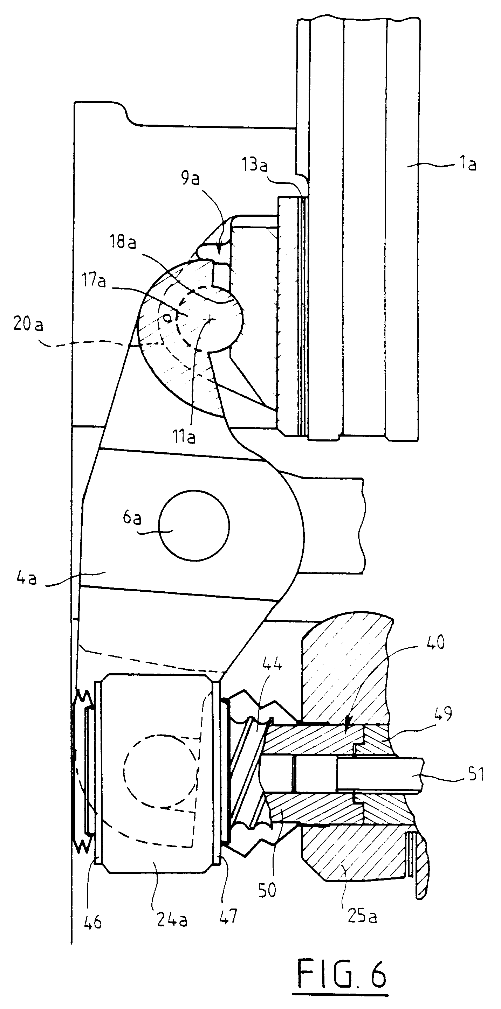

Le dispositif de freinage représenté sur les figures 5 et 6 comporte des éléments constitutifs ayant la même structure et la même fonction que celles des éléments correspondants du dispositif de freinage décrit en référence aux figures 1 à 4. Ces éléments seront donc désignés ci-après par les mêmes références que celles utilisées sur les figures 1 à 4 mais accompagnées de la lettre a.

En fait, le dispositif visible sur les figures 5 et 6 se différencie du dispositif déjà décrit, uniquement par la tige 22a et les pièces annulaires 23a,24a de ses organes de commande 14a.

La tige 22a comprend en effet un tronçon intermédiaire 40 sur lequel est calé le levier 25a et deux tronçons latéraux 41,42 ayant des filetages opposés délimitant, avec des filetages complémentaires ménagés dans les pièces annulaires 23a,24a, des pistes 43,44 renfermant des billes 45, lesquelles permettent auxdites pièces annulaires de se déplacer en sens inverse le long des tronçons latéraux 41,42 lors d'une opération de freinage.

Les billes 45 sont retenues dans les pistes 43,44 par deux bagues 46,47 fixées aux extrémités des pièces annulaires 23a,24a, des ressorts 48 logés dans les pistes 43,44 étant comprimés entre les bagues 47 adjacentes au levier 25 et les billes extrêmes les plus proches de ces bagues.

Lors d'une opération de freinage, les pièces annulaires 23a,24a se déplacent le long de la tige 22a en s'éloignant l'une de l'autre et font pivoter les mâchoires 3a,4a de façon à appliquer les plaquettes 12a,13a contre le disque 1a.

Puis, lorsque l'opération de freinage est terminée, les pièces annulaires 23a,24a reviennent sensiblement dans leur position d'origine, les billes 45 étant rappelées dans leur position initiale par les ressorts 48.

On notera ici que l'usure des plaquettes 12a,13a du dispositif de freinage selon les figures 5 et 6 peut également être compensée, la position des pièces annulaires sur les tronçons latéraux 41,42 de la tige 22a pouvant varier, grâce au mécanisme de rattrapage d'usure et aux ressorts 48 destinés à assurer le rappel des billes 45, de la position représentée sur la figure 5 qui correspond au cas où les plaquettes sont neuves à la position représentée sur la figure 6 qui correspond au cas où les plaquettes sont usées.

Pour être complet, on précisera que la tige 22a est constituée de deux demi-tiges 49,50 réunies bout à bout au niveau de son tronçon intermédiaire 40 par un élément fileté 51 s'étendant coaxialement avec lesdites demi-tiges, et qu'elle peut ainsi être très facilement montée sur le dispositif de freinage ou démontée.

## Revendications

1. Dispositif de freinage comprenant un disque (1 ; 1a) solidaire en rotation d'un organe à freiner (2), notamment d'un arbre de roue de véhicule, deux mâchoires (3,4 ; 3a,4a) ayant chacune une première et une seconde extrémités, ces mâchoires étant situées de part et d'autre du disque et montées à pivotement sur deux axes fixes (5,6 ; 5a,6a) solidaires d'un bâti (7), deux sabots (8,9 ; 8a,9a) articulés sur les mâchoires autour de deux axes (10,11 ; 10a,11a) parallèles aux axes fixes, des plaquettes de frein (12,13 ; 12a,13a) montées sur les sabots de part et d'autre du disque, et des organes de commande (14 ; 14a) aptes à faire pivoter les mâchoires dans un sens afin d'appliquer les plaquettes contre le disque ou en sens inverse afin d'éloigner les plaquettes de ce dernier, les axes de pivotement (5,6 ; 5a,6a) des mâchoires étant situés entre les première et seconde extrémités de ces dernières tandis que les sabots (8,9 ; 8a,9a) et les organes de commande (14 ; 14a) sont respectivement adjacents auxdites première et seconde extrémités, caractérisé en ce que les mâchoires (3,4 ; 3a,4a) comportent à leur première extrémité un bossage cylindrique (15,17 ; 15a,17a) logé partiellement dans un renfoncement cylindrique (16,18 ; 16a,18a) de même rayon, aux tolérances de montage près, ménagé dans le sabot correspondant, les bossages et les renfoncements assurant les articulations des sabots sur les mâchoires.

2. Dispositif de freinage selon la revendication 1, caractérisé en ce que les bossages (15,17 ; 15a,17a) comportent deux prolongements axiaux (15',17' ; 15'a,17'a) faisant saillie latéralement sur les mâchoires et s'avançant jusqu'à des protubérances (19,20 ; 19',20') prévues sur les sabots (8,9 ; 8a,9a), la retenue des sabots sur les mâchoires (3,4 ; 3a,4a) étant assurée uniquement par des goupilles (21 ; 21a) traversant les protubérances et s'étendant le long des prolongements des bossages.

3. Dispositif de freinage selon la revendication 1 ou 2, caractérisé en ce que les organes de commande (14 ; 14a) comprennent une tige (22 ; 22a) portant une première et une seconde pièces annulaires (23,24 ; 23a,24a) sur lesquelles les mâchoires (3,4 ; 3a,4a) sont articulées, un levier (25 ; 25a) calé sur la tige, entre les pièces annulaires, et un dispositif de commande pneumatique (26) attelé au levier de façon à ce que celui-ci fasse tourner la tige autour de son axe longitudinal lors d'une opération de freinage, au moins l'une des deux pièces annulaires étant apte à se déplacer axialement sur la tige lorsque celle-ci est entraînée en rotation et à assurer ainsi l'actionnement des mâchoires (3,4 ; 3a,4a).

4. Dispositif de freinage selon la revendication 3, caractérisé en ce que les organes de commande (14) comprennent un mécanisme de rattrapage d'usure (29,29a) comportant une première patte (30,30a) solidaire du levier (25,25a), une seconde patte (31,31a) solidaire de l'une (23,23a) des pièces annulaires, la seconde patte étant parellèle et adjacente à la première patte, et un axe (32,32a) fixé sur la première patte mais apte à se déplacer axialement dans un orifice (34,34a) de la seconde patte lors d'une commande de freinage et à permettre le déplacement de la ou des pièces annulaires le long de la tige (22,22a) en cas d'usure des plaquettes (12,13 ; 12a,13a).

5. Dispositif de freinage selon la revendication 3 ou 4, caractérisé en ce que la tige (22) comporte un tronçon latéral fileté (35) ayant un filetage en prise avec un filetage ménagé dans la seconde pièce annulaire (24), un tronçon latéral lisse (36) monté pivotant dans la première pièce annulaire (23), ainsi qu'un tronçon intermédiaire (37) formant un épaulement (38) avec le tronçon latéral lisse et sur lequel est calé le levier (25), une butée à rouleaux (39) solidaire de la première pièce annulaire (23) étant montée sur le tronçon latéral lisse (36) et s'appuyant contre l'épaulement (38).

6. Dispositif de freinage selon le revendication 5, caractérisé en ce que le tronçon latéral lisse (36) a un diamètre inférieur à celui du tronçon latéral fileté (35) dont le filetage a un pas d'au moins 50 mm.

7. Dispositif de freinage selon le revendication 3 ou 4, caractérisé en ce que le tige (22a) comprend un tronçon intermédiaire (40) sur lequel est calé le levier (25a), et deux tronçons latéraux (41,42) ayant des filetages opposés (43,44) délimitant, avec des filetages complémentaires ménagés dans les pièces annulaires (23a,24a), des pistes renfermant des billes (45) permettant auxdites pièces annulaires de se déplacer en sens inverse le long des tronçons latéraux lors d'une opération de freinage.

8. Dispositif de freinage selon la revendication 7, caractérisé en ce que les pièces annulaires (23a,24a) portent des bagues (46,47) pour empêcher les billes de sortir des pistes, des ressorts (48) étant prévus entre l'une des bagues et les billes extrêmes adjacentes à cette dernière pour rappeler l'ensemble des billes dans leur position d'origine après une opération de freinage.

9. Dispositif de freinage selon l'une quelconque des revendications 3, 5 et 7, caractérisé en ce que la tige (22a) est constituée de deux demi-tiges (49,50) réunies bout à bout au niveau du tronçon intermédiaire (40) par un élément fileté (51) s'étendant coaxialement avec lesdites demi-tiges.

10. Dispositif de freinage selon l'une quelconque des revendications 3 à 9, caractérisé en ce que les première et seconde pièces annulaires (23,24 ; 23a,24a) comportent chacune deux tenons diamétralement opposés (23' ; 24') faisant saillie sur leur surface latérale, les mâchoires (3,4) étant articulées sur les pièces annulaires par l'intermédiaire des tenons.

## Claims

1. A braking device including a disc (1; 1a) rotatable with a member to be braked (2), in particular a vehicle wheel shaft, two jaws (3, 4; 3a, 4a) each having a first and a second end, these jaws being located on either side of the disc and mounted pivotally on two fixed pins (5, 6; 5a, 6a) integral with a frame (7), two shoes (8, 9; 8a, 9a) articulated on the jaws about two axes (10, 11; 10a, 11a) parallel with the fixed pins, brake pads (12, 13; 12a, 13a) mounted on the shoes on either side of the disc, and control members (14; 14a) capable of causing the jaws to pivot in one direction in order to press the pads against the disc, or in the opposite direction in order to move them away from the said disc, the pivot pins (5, 6; 5a, 6a) of the jaws being located between the first and second ends of the jaws, while the shoes (8, 9; 8a, 9a) and the control members (14; 14a) are respectively adjacent to the said first and second ends, characterized in that the jaws (3, 4; 3a, 4a) comprise at their first end a cylindrical boss (15, 17; 15a, 17a) partially housed in a cylindrical recess (16, 18; 16a, 18a) of the same radius, with the exception of the mounting clearance, provided in the corresponding shoe, the bosses and the recesses providing the articulations of the shoes on the jaws.

2. Braking device according to claim 1, characterized in that the bosses (15, 17; 15a, 17a) comprise two axial extensions (15', 17'; 15'a, 17'a) projecting laterally from the jaws and advancing up to protuberances (19, 20, 19', 20') provided on the shoes (8, 9; 8a, 9a), the shoes being retained on the jaws (3, 4; 3a, 4a) solely by pins (21; 21a) passing through the protuberances and extending along the extensions of the bosses.

3. Braking device according to claim 1 or 2, characterized in that the control members (14; 14a) include a rod (22; 22a) carrying a first and a second annular piece (23, 24; 23a, 24a) on which the jaws (3, 4; 3a, 4a) are articulated, a lever (25; 25a) fixed to the rod, between the annular pieces, and a pneumatic control device (26) connected to the lever in such a way that the latter causes the rod to rotate about its longitudinal axis during a braking operation, at least one of the two annular pieces being capable of axial movement along the rod when the latter is rotated and of thus ensuring the actuation of the jaws (3, 4; 3a, 4a).

4. Braking device according to claim 3, characterized in that the control members (14) include a wear take-up mechanism (29, 29a) comprising a first lug (30, 30a) integral with the lever (25, 25a), a second lug (31, 31a) integral with one (23, 23a) of the annular pieces, the second lug being parallel with and adjacent to the first lug, and a pin (32, 32a) fixed to the first lug but capable of moving axially through an orifice (34, 34a) in the second lug when a braking command is given, and of allowing the annular piece or pieces to be moved along the rod (22, 22a) in the event of the pads (12, 13; 12a, 13a) becoming worn.

5. Braking device according to claim 3 or 4, characterized in that the rod (22) comprises a threaded lateral section (35) having a thread engaging with a thread provided in the second annular piece (24), a smooth lateral section (36) pivotally mounted in the first annular piece (23), as well as an intermediate section (37) forming a shoulder (38) with the smooth lateral section and to which the lever (25) is fixed, a roller thrust bearing (39) integral with the first annular piece (23) being mounted on the smooth lateral section (36) and bearing against the shoulder (38).

6. Braking device according to claim 5, characterized in that the smooth lateral section (36) has a diameter smaller than that of the threaded lateral section (35) the thread of which has a pitch of at least 50 mm.

7. Braking device according to claim 3 or 4, characterized in that the rod (22a) includes an intermediate section (40) to which the lever (25a) is fixed, and two lateral sections (41, 42) having opposite threads (43, 44) delimiting, with complementary threads provided in the annular pieces (23a, 24a), raceways containing bearing balls (45) allowing the said annular pieces to move in opposite directions along the lateral sections during a braking operation.

8. Braking device according to claim 7, characterized in that the annular pieces (23a, 24a) carry rings (46, 47) to prevent the bearing balls from escaping from the raceways, springs (48) being provided between one of the rings and the end bearing balls adjacent to said one ring to bias all of the bearing balls back to their initial position after a braking operation.

9. Braking device according to any one of claims 3, 5 and 7, characterized in that the rod (22a) is made up of two half rods (49, 50) joined together end to end at the intermediate section (40) by a threaded element (51) extending coaxially with the said half rods.

10. Braking device according to any one of claims 3 to 9, characterized in that the first and second annular pieces (23, 24; 23a, 24a) each comprise two diametrically opposed studs (23'; 24') projecting on their lateral surface, the jaws (3, 4) being articulated on the annular pieces via the studs.

## Patentansprüche

1. Bremsvorrichtung mit einer Scheibe (1 ; 1a), die mit einem zu bremsenden Glied (2), insbesondere einer Radwelle eines Fahrzeuges, drehfest verbunden ist, zwei Bremsbacken (3, 4 ; 3a, 4a) mit je einem ersten und zweiten Ende, wobei die Backen beiderseits der Scheibe angeordnet und auf zwei feststehenden, mit einem Rahmen (7) verbundenen Achsen (5, 6 ; 5a, 6a) schwenkbar gelagert sind, zwei Bremsschuhen (8, 9 ; 8a, 9a), die an den Bremsbacken um zwei parallel zu den feststehenden Achsen verlaufenden Achsen (10, 11 ; 10a, 11a) angelenkt sind, Bremsklotzen (12, 13 ; 12a, 13a), die beiderseits der Scheibe an den Bremsschuhen angebracht sind, sowie Steuergliedern (14 ; 14a), die die Bremsbacken in einer Richtung zur Anlage der Bremsklotze an die Scheibe oder in der Gegenrichtung zum Entfernen der Bremsklotze von letzterer drehen können, wobei die Schwenkachsen (5, 6 ; 5a, 6a) der Bremsbacken zwischen deren erstem und zweitem Ende liegen, während die Bremsschuhe (8, 9 ; 8a, 9a) und die Steuerglieder (14 ; 14a) dem ersten bzw. zweiten Ende benachbart liegen, dadurch gekennzeichnet, daß die Bremsbacken (3, 4 ; 3a, 4a) am ersten Ende einen zylindrischen Vorsprung (15, 17 ; 15a, 17a) aufweisen, der zum Teil in einem zylindrischen Rücksprung (16, 18 ; 16a, 18a) gleichen Radius den Montagetoleranzen gemäß untergebracht ist, welcher im zugehörigen Bremsschuh eingearbeitet ist, wobei Vor- und Rücksprünge die Gelenke der Bremsschuhe an den Bremsbacken bilden.

2. Bremsvorrichtung nach Anspruch 1, dadurch gekennzeichnet, daß die Vorsprünge (15, 17 ; 15a, 17a) zwei axiale Verlängerungen (15', 17' ; 15'a, 17'a) aufweisen, die seitlich auf den Bremsbacken vorspringen und bis zu auf den Bremsschuhen (8, 9 ; 8a, 9a) vorgesehenen Ausformungen (19, 20 ; 19', 20') ragen, wobei die Bremsschuhe an den Bremsbacken (3, 4 ; 3a, 4a) lediglich durch Stifte (21, 21a) festgehalten werden, die durch die Ausformungen durchgeführt sind und entlang den Verlängerungen der Vorsprünge verlaufen.

3. Bremsvorrichtung nach Anspruch 1 oder 2, dadurch gekennzeichnet, daß die Steuerglieder (14 ; 14a) eine Stange (22 ; 22a) umfassen, die ein erstes und ein zweites Ringstück (23, 24 ; 23a, 24a) trägt, an welchen die Bremsbacken (3, 4; 3a, 4a) angelenkt sind, sowie einen zwischen den Ringstücken auf der Stange festsitzenden Hebel (25 ; 25a) und eine pneumatische Steuereinrichtung (26), die am Hebel derart angekuppelt ist, daß dieser die Stange um ihre Längsachse beim Bremsen dreht, wobei mindestens eines der beiden Ringstücke auf der Stange axial beweglich ist, wenn letztere drehangetrieben ist, und somit die Betätigung der Bremsbacken (3, 4 ; 3a, 4a) gewährleistet.

4. Bremsvorrichtung nach Anspruch 3, dadurch gekennzeichnet, daß die Steuerglieder (14) eine Verschleißausgleichseinrichtung (29, 29a) aufweisen mit einem ersten, mit dem Hebel (25, 25a) verbundenen Lappen (30, 30a), einem zweiten, mit einem (23, 23a) der Ringstücke verbundenen Lappen (31, 31a), der dem ersten parallel und benachbart verläuft, und einer Achse (32, 32a), die zwar auf dem ersten Lappen befestigt ist, aber in einer Öffnung (34, 34a) des zweiten Lappens bei einer Bremssteuerung axial verschieblich ist und die Verschiebung des Ringstückes bzw. der Ringstücke entlang der Stange (22, 22a) bei abgenutzten Bremsklotzen (12, 13 ; 12a, 13a) erlauben kann.

5. Bremsvorrichtung nach Anspruch 3 oder 4, dadurch gekennzeichnet, daß die Stange (22) einen Gewindeseitenabschnitt (35) aufweist, dessen Gewinde mit einem im zweiten Ringstück (24) eingearbeiteten Gewinde greift, sowie einen glatten Seitenabschnitt (36), der schwenkbar im ersten Ringstück (23) gelagert ist, und einen Zwischenabschnitt (37), der mit dem glatten Seitenabschnitt eine Schulter (38) bildet und auf dem der Hebel (25) festsitzt, wobei ein mit dem ersten Ringstück (23) verbundenes Rollenlager (39) auf dem glatten Seitenabschnitt (36) angebracht und an der Schulter (38) abgstützt ist.

6. Bremsvorrichtung nach Anspruch 5, dadurch gekennzeichnet, daß der glatte Seitenabschnitt (36) ein kleineres Durchmesser aufweist als der Gewindeseitenabschnitt (35), dessen Gewinde eine Steigung von mindestens 50 mm aufweist.

7. Bremsvorrichtung nach Anspruch 3 oder 4, dadurch gekennzeichnet, daß die Stange (22a) einen Zwischenabschnitt (40) aufweist, auf dem der Hebel (25a) festsitzt, und zwei Seitenabschnitte (41, 42) mit entgegengesetzten Gewinden (43, 44), die mit ergänzenden, in den Ringstücken (23a, 24a) eingearbeiteten Gewinden Kugeln (45) beinhaltende Bahnen bilden, die den Ringstücken erlauben, sich beim Bremsen gegensinnig entlang den Seitenabschnitten zu bewegen.

8. Bremsvorrichtung nach Anspruch 7, dadurch gekennzeichnet, daß die Ringstücke (23a, 24a) Ringe (46, 47) zur Verhinderung eines Austretens der Kugeln aus den Bahnen tragen, wobei zwischen dem einen Ring und den äußersten, letzterem benachbarten Kugeln Federn (48) vorgesehen sind, um die gesamten Kugeln nach dem Bremsen in die Ausgangsposition zurückzustellen.

9. Bremsvorrichtung nach einem der Ansprüche 3, 5 oder 7, dadurch gekennzeichnet, daß die Stange (22a) aus zwei Stifthälften (49, 50) besteht, die am Zwischenabschnitt (40) durch ein koaxial mit letzteren verlaufendes Gewindeelement (51) stumpf miteinander verbunden sind.

10. Bremsvorrichtung nach einem der Ansprüche 3 bis 9, dadurch gekennzeichnet, daß das erste und das zweite Ringstück (23, 24 ; 23a, 24a) je zwei diametral entgegengesetzte Zapfen (23' ; 24') auweist, die an ihrer Seitenfläche vorspringen, wobei die Bremsbacken (3, 4) an den Ringstücken über den Zapfen angelenkt sind.
